# EUROPEAN PATENT APPLICATION

(11) **EP 3 858 741 A1**
(43) Date of publication of application: **04.08.2021**
(21) Application number: 18935939.1
(22) Date of filing: 29.09.2018
(51) Int. Cl.: B64D 47/08, H02J 7/00

(54) **STORAGE BOX AND GIMBAL ASSEMBLY HAVING SAME**

(71) Applicant: SZ DJI Technology Co., Ltd., Shenzhen, Guangdong 518057 (CN)
(72) Inventor: ZHANG, Lei, Shenzhen, Guangdong 518057 (CN); MA, Tianhang, Shenzhen, Guangdong 518057 (CN); HE, Baichuan, Shenzhen, Guangdong 518057 (CN); ZHAO, Tao, Shenzhen, Guangdong 518057 (CN)
(74) Representative: Goddar, Heinz J.
(86) International application number: PCT/CN2018/108814
(87) International publication number: WO 2020/062170

(57) **Abstract**

A storage box and a gimbal assembly having the storage box are provided. The storage box (200) includes an outer cylinder (1) having a top surface (11), a bottom surface (12) and a side wall (13), the sidewall having an opening; a frame (2) arranged inside the outer cylinder and having a rotatable connection with the outer cylinder. The space between a surface of the frame and the sidewall of the outer cylinder forms a storage member (3). As the frame rotates relative to the outer cylinder, the opening and the storage member are alternating between a first relative position and a second relative position. The rotatable connection design of the frame and the outer cylinder enables the relative positions between the opening and the storage member to alternate as the frame rotates relative to the outer cylinder. Through the ingenious structural design, the open and close of the storage box may be realized. The storage box has the advantages of easy operation, beautiful structure, and easy to carry.

## Description

### TECHNICAL FIELD

The present disclosure generally relates to the field of storage and, more particularly, relates to a storage box and a gimbal assembly having the storage box.

### BACKGROUND

In the existing technology, when not in-use, a gimbal and its components are usually placed directly on a workbench or held by the user's hand, the gimbal and its components are very easy to lose, and the way to hand hold the gimbal and its components will cause greater distress to the user. Thus, it is urgent to design a structure that is convenient to store the gimbal, and easy to carry.

### SUMMARY

The present disclosure provides a storage box and a gimbal assembly having the storage box.

In particular, the present disclosure is realized through the following technical schemes.

According to the first aspect of the present disclosure, a storage box is provided, the storage box may include:
an outer cylinder having a top face, a bottom surface and a sidewall with the sidewall having an opening; and
a frame, disposed inside the outer cylinder, and having a rotatable connection with the outer cylinder.

The space between a surface of the frame and the sidewall of the outer cylinder may form a storage member. As the frame rotates relative to the outer cylinder, the opening and the storage member may alternate between a first relative position and a second relative position.

According to the second aspect of the present disclosure, a gimbal assembly is provided. The gimbal assembly may include a gimbal, and may also include a storage box for the storage of the gimbal. The storage box may include:
an outer cylinder having a top face, a bottom surface and a sidewall with the sidewall having an opening; and
a frame, disposed inside the outer cylinder, and having a rotatable connection with the outer cylinder.

The space between a surface of the frame and the sidewall of the outer cylinder may form a storage member. As the frame rotates relative to the outer cylinder, the opening and the storage member may alternate between a first relative position and a second relative position.

According to the third aspect of the present disclosure, a storage box is provided. The storage box may include:
an outer cylinder having a top face, a bottom surface and a sidewall with the sidewall having an opening;
a main control board disposed in the outer cylinder; and
an electrical contact component electrically connected with the main control board with the electrical contact component being disposed in an inner sidewall surface of the outer cylinder.

Wherein, when the gimbal is placed into the outer cylinder through the opening, the electrical contact component may mate with the gimbal such that the main control board and the gimbal may achieve an electrical connection to charge the gimbal through the main control board, and/or, to have a data interaction with the gimbal.

According to the fourth aspect of the present disclosure, a gimbal assembly is provided. The gimbal assembly may include a gimbal and may also include a storage box for storing the gimbal. The storage box may include:
an outer cylinder having a top face, a bottom surface and a sidewall with the sidewall having an opening; and
a main control board disposed in the outer cylinder; and
an electrical contact component electrically connected to the main control board with the electrical contact component being disposed on the inner sidewall surface of the outer cylinder.

The gimbal may be provided with an electrical mating component. When the gimbal is placed into the outer cylinder through the opening, the electric contact component may be electrically mated with the electrical mating component such that the main control board may be electrically connected to the gimbal to charge the gimbal through the main control board, and/or have a data exchange with the gimbal.

According to the fifth aspect of the present disclosure, a storage box for a gimbal is provided. The storage box may include:
an outer cylinder having a top face, a bottom surface and a sidewall with the sidewall having an opening; and
a frame disposed inside the outer cylinder and having a rotatable connection with the outer cylinder.

The space between the frame and the outer cylinder may form a storage member for storing the gimbal.

It can be seen from the technical solutions provided by the above embodiments of the present disclosure that the design of the rotatable connection between the frame and the outer cylinder in the embodiments of the present disclosure may enable the relative position between the opening and the storage member to alternate as the frame rotates relative to the outer cylinder. Through the ingenious structural design, the open and close of the storage box may be realized, and the storage box may have the advantages of simple operation, beautiful structure, and portability.

### BRIEF DESCRIPTION OF THE DRAWINGS

To more clearly describe the technical solutions in the embodiments of the present disclosure, the following will briefly introduce the drawings needed in the description of the embodiments. Obviously, the drawings in the following description are only some embodiments of the present disclosure. For those of ordinary skill in the art, other drawings may be obtained based on these drawings without creative labor.
FIG. 1 is a structural diagram of a storage box at a close state in one embodiment of the present disclosure;
FIG. 2 is a structural diagram of a storage box at an open state in one embodiment of the present disclosure;
FIG. 3 is a schematic structural diagram of a storage box in one embodiment of the present disclosure, revealing a connection relationship between the frame and the outer cylinder;
FIG. 4 is a partially enlarged view of a portion of the structure in FIG. 3;
FIG. 5 is a schematic structural view of the top surface of the outer cylinder of the storage box in one embodiment of the present disclosure;
FIG. 6 is a schematic structural view of the storage box along another direction in one embodiment of the present disclosure;
FIG. 7 is a partially enlarged view of a portion of the structure in FIG. 6;
FIG. 8 is a structural block diagram of a storage box in one embodiment of the present disclosure;
FIG. 9 is a structural diagram of a storage box along another direction in one embodiment of the present disclosure;
FIG. 10 is a partially enlarged view of a portion of the structure in FIG. 9;
FIG. 11 is a structural block diagram of a storage box in one specific embodiment of the present disclosure, revealing a charging method of the storage box to the gimbal;
FIG. 12 is a structural block diagram of a storage box in another specific embodiment of the present disclosure, revealing another way of charging the gimbal by the storage box;
FIG. 13 is a structural block diagram of a storage box in a specific embodiment of the present disclosure, revealing a data interaction mode between the storage box and the gimbal;
FIG. 14 is a schematic structural view of a storage box at a close state in one specific embodiment of the present disclosure;
FIG. 15 is a structural diagram of a storage box at an open state in one specific embodiment of the present disclosure;
FIG. 16 is a schematic diagram of a state in which the gimbal is placed into the storage box in one specific embodiment of the present disclosure;
FIG. 17 is a partially enlarged view of a portion of the structure in FIG. 6;
FIG. 18 is a schematic diagram of a state where the gimbal is stored in a storage box in one embodiment of the present disclosure;
FIG. 19 is a schematic diagram of a state in which the gimbal components are placed in a storage box in an embodiment of the present disclosure; and
FIG. 20 is a schematic diagram of a state in which the components of the gimbal are stored in a storage box in one embodiment of the present disclosure.

### Reference labels:

100: gimbal;
200: storage box; 1: outer cylinder; 11: top surface; 111: protrusion; 112: sliding protrusion; 12: bottom surface; 13: sidewall; 14: guiding groove; 15: fixing protrusion; 2: frame; 21: fixing member; 22: locking base; 23: charging port; 3: storage member; 4: flat spiral spring; 41: first end; 42: second end; 5: rotation preventing member; 51: clamping protrusion; 52: operation end; 53: elastic member; 6: main control board; 7: electrical contact component; 8: main body; 81: sliding flange; 82: connection component; 9: card slot;
300: adapter;
400: filter; and
500: memory card.

### DETAILED DESCRIPTION OF THE EMBODIMENTS

The following will clearly and completely describe the technical solutions in the embodiments of the present disclosure with reference to the accompanying drawings in the embodiments of the present disclosure. Obviously, the described embodiments are only a part of the embodiments of the present disclosure, not all of them. Based on the embodiments of the present disclosure, all other embodiments obtained by those of ordinary skill in the art without creative work shall fall within the protection scope of the present disclosure.

The storage box and the gimbal assembly having the storage box of the present disclosure will be described in detail below with reference to the accompanying drawings. In the case of no conflict, the following embodiments and features in the implementation may be combined with each other.

### Embodiment one

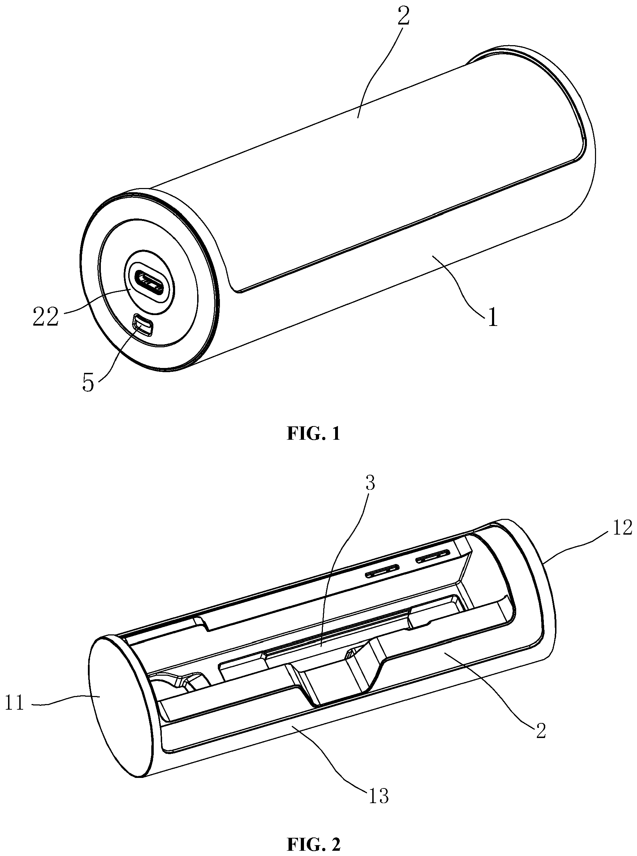

As shown in FIG. 1 and FIG. 2, the first embodiment of the present disclosure provides a storage box 200. The storage box 200 may include an outer cylinder 1 and a frame 2. The outer cylinder 1 of this embodiment may have a top surface 11, a bottom surface 12, and a sidewall 13. The sidewall 13 may have an opening. The frame 2 may be disposed inside the outer cylinder 1, and the frame 2 and the outer cylinder 1 may have a rotatable connection. In such an embodiment, the space between a surface of the frame 2 and the sidewall 13 of the outer cylinder 1 may form a storage member 3. The relative positions between the opening and the storage member 3 may be changed as the frame 2 rotates relative to the outer cylinder 1 to realize the open and close of the storage member 3.

In particular, the relative positions between the opening and the storage member 3 may include a first relative position and a second relative position. The first relative position may refer to the relative position between the opening and the storage member 3 when the frame 2 rotates relative to the outer cylinder 1 to cause the storage member 3 to be partially or entirely exposed by the opening. The first relative position in this embodiment refers to the relative position between the opening and the storage member 3 when the frame 2 rotates relative to the outer cylinder 1 to cause that the entire storage member 3 is exposed by the opening (as shown in FIG. 2). In this embodiment, when the opening and the storage member 3 are at the first relative position, the storage member 3 may be exposed by the opening, and at this time, the to-be-stored object may be placed into the storage member 3 through the opening. Further, the second relative position may refer to the relative position between the opening and the storage member 3 when the frame 2 rotates relative to the outer cylinder 1 and the entire storage member 3 is blocked by the sidewall 13 (as shown in FIG. 1). In this embodiment, when the opening and the storage member 3 are at the second relative position, the storage member 3 may be blocked by the sidewall 13 to realize the storage function.

The opening and the storage member 3 of this embodiment may alternate between the first relative position and the second relative position as the frame 2 rotates relative to the outer cylinder 1. Through the ingenious structural design, the open and close of the storage box 200 may be realized. The storage box 200 may have the advantages of simple operation, beautiful structure, and portability.

In this embodiment, the frame 2 may be cylindrical or sheet-shaped, and the frame 2 and the outer cylinder 1 may rotate around the same central axis. The frame 2 may be rotated manually, or the frame 2 and the outer cylinder 1 may be rotated manually, or the outer cylinder 1 may be manually rotated such that the frame 2 and the outer tube 1 may rotate relatively.

The implemented structure of the rotatable connection of the frame 2 and the outer cylinder 1 may include multiple types. For example, the rotatable connection of the frame 2 and the outer cylinder 1 may be realized through an elastic member, or the rotatable connection between the frame 2 and the outer cylinder 1 may be realized through gear teeth engagement between the frame 2 and the outer cylinder 1, or the rotatable connection between the frame 2 and the outer cylinder 1 may be realized through a damping structure disposed between the frame 2 and the outer cylinder 1. It can be understood that the implementation of the rotatable connection between the frame 2 and the outer cylinder 1 is not limited to the above-mentioned methods, and other methods may also be selected to realize the rotatable connection between the frame 2 and the outer cylinder 1.

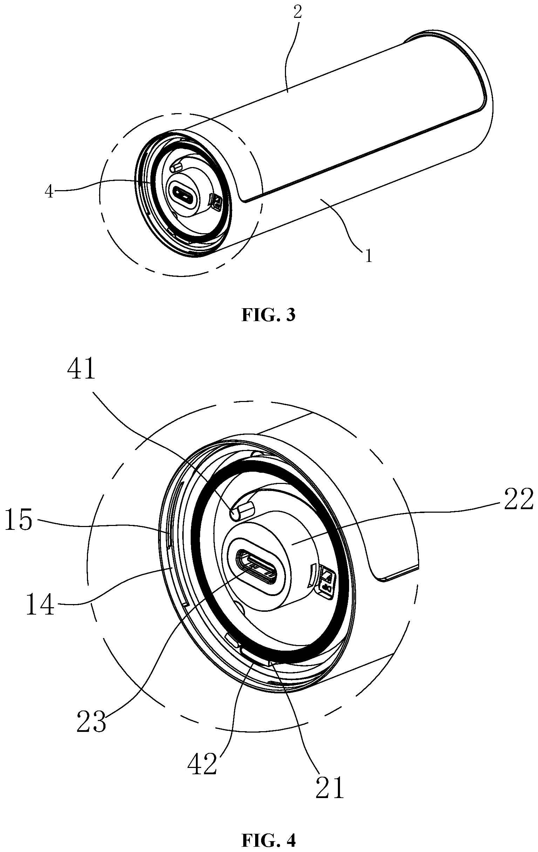

In the following embodiments, the rotatable connection between the frame 2 and the outer cylinder 1 will be described in detail by using the elastic member to realize the rotatable connection between the frame 2 and the outer cylinder 1. As shown in FIGS. 3-4, in one embodiment, the elastic member may include a flat spiral spring 4 connected between the frame 2 and the outer cylinder 1. The flat spiral spring 4 may include a first end 41 and a second end 42. The first end 41 may be mated with the outer cylinder 1, and the second end 42 may be mated with the frame 2 to realize the rotatable connection between the frame 2 and the outer cylinder 1.

The flat spiral spring 4 may be disposed between the bottom surface 12 of the outer cylinder and the frame 2, or between the top surface 11 of the outer cylinder 1 and the frame 2. In one embodiment, the flat spiral spring 4 may be disposed between the bottom surface 12 of the outer cylinder 1 and the frame 2, and the first end 41 may be mated with the bottom surface 12 of the outer cylinder 1, or the inner sidewall surface of the outer cylinder 1. Optionally, referring to FIGS. 4-5, the first end 41 may form a bending member, the bottom surface 12 of the outer cylinder 1 may be provided with a protrusion 111, and the bending member of the first end 41 may be mated with the protrusion 111 of the bottom surface 12 of the outer cylinder 1. In particular, the bending member of the first end 41 may be hung on the protrusion 111 of the bottom surface 12 of the outer cylinder 1 to realize a stable connection between the flat spiral spring 4 and the bottom surface 12 of the outer cylinder 1.

Further, the second end 42 may form a bending member. A side of the frame 2 may be provided with a fixing member 21, and the bending member of the second end 42 may be mated with the fixing member 21 at the side of the frame 2. In one embodiment, the bending member of the second end 42 may be hung on the fixing member 21 at the side of the frame 2 to realize a stable connection between the flat spiral spring 4 and the frame 2.

In one embodiment, the flat spiral spring 4 may be sleeved on the frame 2, and the spiral spring 4 may have a balance position. When the flat spiral spring 4 is at the balance position, the flat spiral spring 4 may be at a relaxed state, and the flat spiral spring 4 may not apply an elastic force on the frame 2 and/or the outer cylinder 1. Therefore, when the flat spiral spring 4 is at the balance position, if no external force is applied to the frame 2 and/or the outer cylinder 1, there may be no relative rotation between the frame 2 and of the outer cylinder 1. When an external force is applied to the frame 2 and/or the outer cylinder 1, and when the external force overcomes the elastic force of the flat spiral spring 4 and cause the flat spiral spring 4 to be stretched, the frame 2 may rotate relative to the outer cylinder 1. In one embodiment, when the storage member 3 and the opening are at the first relative position, the flat spiral spring 4 may be at the balance position such that the storage box 200 may be kept at the open state. When the storage member 3 and the opening are at the second relative position, the flat spiral spring 4 may be stretched.

After the flat spiral spring 4 is stretched, due to the elastic force, the flat spiral spring 4 may automatically return to the balance state. Thus, it may be necessary to further lock the frame 2 on the outer cylinder 1 to make the storage member 3 and the opening always at the second relative position to achieve the storage function. In particular, the storage box 200 of this embodiment may further include a rotation preventing member 5 for locking the frame 2 on the outer cylinder 1.

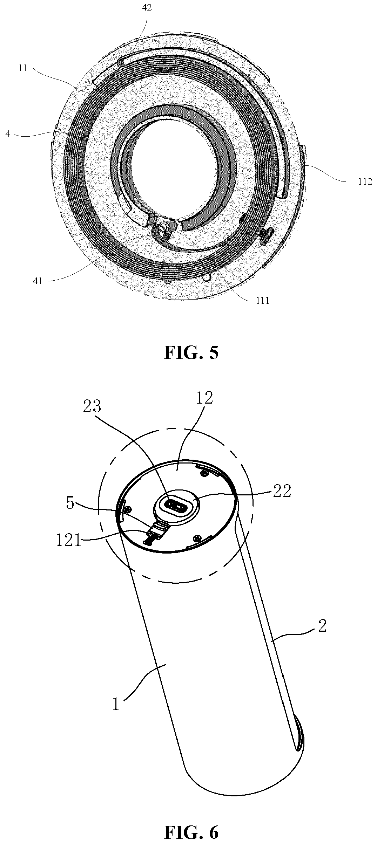

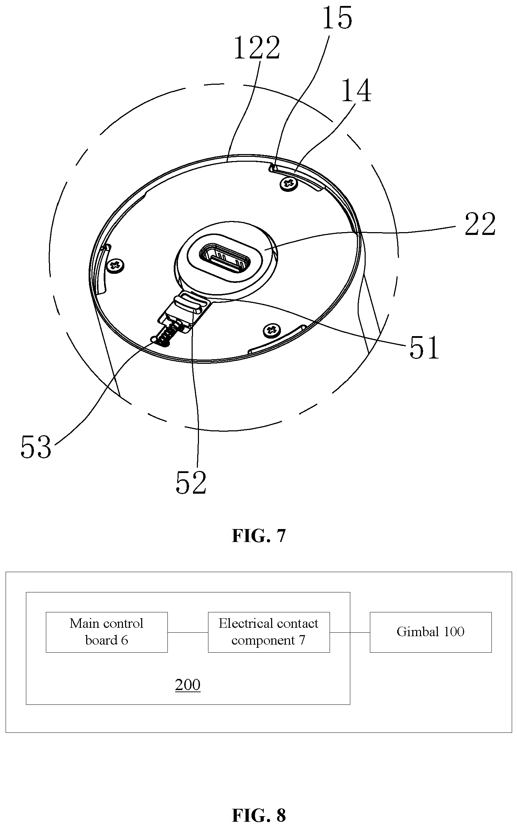

In one embodiment, in conjunction with FIG. 6 and FIG. 7, the rotation preventing member 5 may be connected to the bottom surface 12 of the outer cylinder 1, and the frame 2 may have a locking base 22 that passes the bottom surface 12 of the outer cylinder 1 to be exposed outward from the outer cylinder 1. The rotation preventing member 5 of this embodiment may be able to move relative to the locking base 22 to alternate between the locked state and the unlocked state. In the locked state, the rotation preventing member 5 may mate with the locking base 22; and in the unlocked state, the rotation preventing member 5 may be separated from the locking base 22. In particular, when the rotation preventing member 5 moves relative to the locking base 22 to the unlocked state, the rotation preventing member 5 may not limit the frame 2, and the frame 2 may be able to rotate relative to the outer cylinder 1 such that the opening and the storage member 3 may alternate between the first relative position and the second relative position. When the opening and the storage member 3 are at the second relative position, the rotation preventing member 5 may move relative to the locking base 22 to the locked state. The rotation preventing member 5 may form a limited position for the frame 2 and may restrict the frame 2 from rotating relative to the outer cylinder 1. Thus, the frame 2 may be locked on the outer cylinder 1 such that the opening and the storage member 3 may be held at the second relative position.

The rotation preventing member 5 and the locking base 22 may be mated by a magnetic attraction or clamping. In one embodiment, referring to FIG. 7, the rotation preventing member 5 may be provided with a clamping protrusion 51, and the locking base 22 may be provided with a clamping groove. When the rotation preventing member 5 moves relative to the locking base 22 to an unlocked state, the clamping protrusion 51 may be separated from the clamping groove; and when the rotation preventing member 5 moves relative to the locking base 22 to the locked state, the clamping protrusion 51 may be mated with the clamping groove. In particular, the rotation preventing member 51 may be operated to move the rotation preventing member 5 away from the locking seat 22 until the clamping protrusion 51 is separated from the clamping groove, the rotation preventing member 5 may be at an unlocked state; and when the rotation preventing member 5 is operated to move the rotation preventing member 5 close to the locking base 22 such that the locking protrusion 51 is mated with the clamping groove, the rotation preventing member 5 may be at a locked state. In this embodiment, when the opening and the storage member 3 are at the second relative position, the clamping protrusion 51 may be aligned with the clamping groove. When the rotation preventing member 5 is operated, the clamping protrusion 51 may be directly inserted into the clamping groove to mate with the clamping groove. When the opening and the storage member 3 are at the first relative position, the clamping protrusion 51 may be staggered from the clamping groove.

To facilitate the operation of the rotation preventing member 5, the rotation preventing member 5 of this embodiment may be provided with an operation end 52. By operating the operation end 52, the rotation preventing member 5 may be moved relative to the locking base 22 to alternate between the locked state and the unlocked state. In one embodiment, the operation end 52 may be operated by pressing, pulling, pushing, or holding, etc., to realize that the rotation preventing member 5 may be close to or away from the locking base 22 such that the rotation preventing member 5 may alternate between the locked state and the unlocked state. The following embodiments further describe examples for pressing the operation terminal 52.

In some embodiments, the two steps of switching the rotation preventing member 5 from the locked state to the unlocked state and from the unlocked state to the locked state are implemented by pressing the operation end 52. In particular, when the operation end 52 is pressed toward the outer circumference of the outer cylinder 1, the rotation preventing member 5 may be moved away from the locking base 22, and may be switched from the locked state to the unlocked state. When the operation end 52 is pressed toward the central axis of the outer cylinder 1, the rotation preventing member 5 may approach the locking base 22 and may be switched from the unlocked state to the locked state.

In other embodiments, the rotation preventing member 5 may be switched from the locked state to the unlocked state by pressing the operation end 52, and the rotation preventing member 5 may be automatically switched from the unlocked state to the locked state. To realize that the rotation preventing member 5 automatically switches from the unlocked state to the locked state, in one embodiment, the rotation preventing member 5 may have an elastic reset function. After pressing the operation end 52 to make the rotation preventing member 5 move away from the locking base 22 and switch from the locked state to the unlocked state, when the operation end 52 is no longer pressed, the rotation preventing member 5 may approach the locking base 22 under its own elastic force and automatically switch from the unlocked state to the locked state. The material of the rotation preventing member 5 may be selected as an elastic material as required such that the rotation preventing member 5 may be moved under the action of external force and may recover by itself when there is no external force. In one embodiment, as shown in FIG. 7, the rotation preventing member 5 may be further provided with an elastic member 53. After pressing the operation end 52 to make the rotation preventing member 5 move away from the locking base 22 and switch from the locked state to the unlocked state, when the operation end is no longer pressed, the rotation preventing member 5 may be moved close to the locking base 22 under the elastic force of the elastic member 53 to automatically switch from the unlocked state to the locked state. In particular, the elastic member 53 of this embodiment may be fixed to the bottom surface 12 of the outer cylinder 1. When the operation end 52 is operated, the rotation preventing member 5 may be moved away from the locking base 22 to be switched to the unlocked state. When the operation end 52 is switched from the operated state to a released state, the rotation preventing member 5 may be moved close to the locking base 22 under the action of the elastic force of the elastic member 53 to switch to the locked state. The elastic member 53 may be a spring or other elastic member made of elastic material.

The rotation preventing member 5 may be one or more. When the rotation preventing member 5 is more than one, each position corresponding to each rotation preventing member 5 on the locking base 22 may be provided with a structure for locking the rotation preventing member 5. As described in the above-mentioned embodiment, the rotation preventing member 5 and the locking base 22 may mate with the locking groove through the locking protrusion 51, and the position of the locking base 22 corresponding to the locking protrusion 51 of each rotation preventing member 5 may be provided with a locking groove.

Further, in conjunction with FIG. 6 and FIG. 7, the bottom surface 12 of the outer cylinder 1 of this embodiment may be provided with a receiving slot. The rotation preventing member 5 may connected with the receiving slot and may slide in the receiving slot. The rotation preventing member 5 may be moved relative to the locking base 22 in the receiving slot to switch between the locked state and the unlocked state. In one embodiment, the position of the rotation preventing member 5 may be limited by the receiving slot.

It can be understood that the structure of the rotation preventing member 5 may not be limited to the implementations of the structures in the above embodiments, and may also be replaced by a magnet between the frame 2 and the outer cylinder 1, or a buckle between the frame 2 and the outer cylinder 1. For example, the frame 2 may be provided with a first magnet, and the position of the outer cylinder 1 corresponding to the first magnet may be provided with a second magnet. As the frame 2 rotates relative to the outer cylinder 1, the first magnet and the second magnet may attract each other to lock the frame 2 on the outer cylinder 1.

The locking base 22 of this embodiment is cylindrical, and the locking base 22 may be provided with a charging port 23 through which the items stored in the storage member 3 can be charged. This embodiment does not specifically limit the type of the charging port 23, and the charging port 23 may be a conventional electrical interface, such as USB.

In one embodiment, the bottom surface 12 of the outer cylinder 1 may include a first cover body. The protrusion 111 may be disposed on the first cover body, and the flat spiral spring 4 may be sleeved on the locking base 22 and may be disposed in the space formed by the first cover body and the frame 2. As shown in FIG. 5, the first cover body may have a ring shape and may have a through hole. The locking base 22 may pass through the through hole to be exposed outward from the outer cylinder 1. In one embodiment, the first cover body and the sidewall 13 (including the inner side wall of the outer cylinder 1) may be fixed together, and the fixed connection method between the first cover body and the sidewall 13 may adopt any existing fixed connection methods. This embodiment provides a simple and easy-to-implement fixed connection method to connect the first cover body with the sidewall 13. In particular, as shown in FIG. 5 and FIG. 7, the edge of the first cover body may be provided with a sliding protrusion 112. The sliding protrusion 112 may be provided a fixing groove and the fixing groove may be opened along the circumference of the first cover body. The inner sidewall surface of the outer cylinder 1 may be provided with a guiding groove 14 and a fixing protrusion 15. The guiding groove 14 and the fixing protrusion 15 may be arranged adjacently along the circumference of the outer cylinder 1. The sliding protrusion 112 may be able to slide along the guiding groove 14 toward the fixing protrusion 15 such that the fixing protrusion 15 may slide into the fixing groove to mate with the fixing groove to make the first cover body be fixed with the sidewall 13. After aligning the sliding protrusion 112 with the guiding groove 14, the first cover body or the sidewall 13 may be rotated to cause the sliding protrusion 112 to slide into the fixing protrusion 15 along the guiding groove 14. Only two steps may be used to achieve the fixed connection between the first cover body and the sidewall 13. Thus, the operation may be simple.

The sliding protrusion 112 may be more than one, and the multiple sliding protrusions 112 may be evenly distributed on the edge of the first cover body. In one embodiment, the inner sidewall surface of the outer cylinder 1 may only include one set of adjacently arranged guiding grooves 14 and fixing protrusions 15, and any one of the plurality of sliding protrusions 112 may be connected to the guiding groove 14 and the fixing protrusion 15 to fix the first cover body on the sidewall 13, and the operation may be simple. In another embodiment, to improve the stability of the fixed connection between the first cover body and the sidewall 13, the number of the guiding grooves 14 and the fixing protrusions 15 may be same as the number of the sliding protrusions 112, and each sliding protrusion 112 may be mated with the adjacent fixing protrusion 15 and the guiding groove 14 in the corresponding group.

In the above embodiment, a set of guiding grooves 14 and fixing protrusions 15 may include a guiding groove 14 and a fixing protrusion 15, or may include two guiding grooves 14 and a fixing protrusion 15. The two guiding grooves 14 may be arranged at both sides of the fixing protrusion 15. The sliding protrusion 112 may slide into the fixing protrusion 15 from any one of the two guiding grooves 14.

In some embodiments, both ends of the fixing groove may penetrate the sliding protrusion 112. When the set of guiding grooves 14 and fixing protrusions 15 include a guide groove 14 and a fixing protrusion 15, one of the two through ends of the fixing groove may be adjacent to the guiding groove 14, and the sliding protrusion 112 may slide into the guiding groove 14 from one through-end of the adjacent guiding groove 14 to be mated with the fixing groove. When a set of guiding grooves 14 and fixing protrusions 15 include two guiding grooves 14 and one fixing protrusion 15, the two guiding grooves 14 may be disposed at both sides of the one fixing protrusion 15, the two through-ends of the fixing groove may be respectively adjacent to the guiding groove 14 at the corresponding side. The sliding protrusion 112 may slide into the guiding groove 14 from any through-end. In other examples, one through-end of the fixing groove may pass through the sliding protrusion 112, and the through-ends of the fixing groove may be adjacent to the guiding grooves 14, and the sliding protrusion 112 may slide into the fixing groove from the through-end to mate with the fixing groove.

In one embodiment, the size of the fixing grooves may gradually decrease from the end adjacent to the guiding groove 14 toward the direction away from the guiding groove 14. The size of the end of the fixing groove adjacent the guiding groove 14 may be designed to be larger to make it may easy for the sliding protrusion 112 to slide into the fixing groove from the guiding groove 14. Further, as the sliding protrusion 112 gradually slides into the fixing groove, because the size of the fixing groove may be gradually reduced, the sliding protrusion 112 may be finally snap-connected with the fixing groove to realize the fixed connection between the first cover body and the sidewall 13.

Further, the length of the sliding protrusion 112 along the circumferential direction of the first cover body and the length of the fixing groove along the circumferential direction of the sidewall 13 may be equal or different, which is not specifically limited in this embodiment.

Further, the bottom surface 12 of the outer cylinder 1 may further include a second cover body, and the second cover body may be disposed at a side of the first cover body away from the storage member 3. Plug-in protrusions may be disposed on a side of the second cover body facing the first cover of this embodiment. The plug-in protrusions may be inserted into the gap between the first cover body and the inner sidewall surface of the outer cylinder 1 to improve the aesthetics of the product.

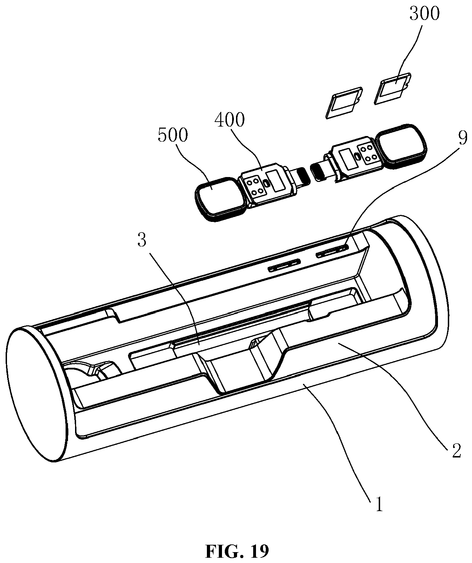

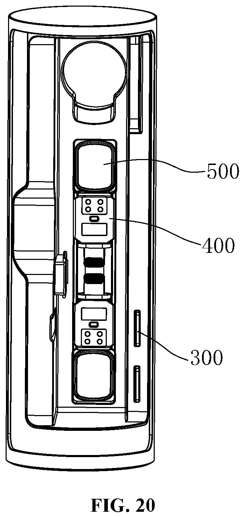

The storage box 200 of this embodiment may be used to store the gimbal 100, or the gimbal 100 and gimbal components (terminal adapter 300, filter 400, memory card 500 in FIG. 19 and FIG. 20), etc. In a specific embodiment, the storage box 200 may store two terminal adapters 300, four filters 400, and two memory cards 500 while storing the gimbal 100. The gimbal 100 stored in the storage box 200 may be a handheld gimbal or a non-handheld gimbal. It is understandable that the storage box 200 of this embodiment may also be used to store other to-be-stored items in addition to the gimbal 100 and gimbal components, which are not listed here.

As shown in FIGS. 8-10, the storage box 200 of this embodiment may further include a main control board 6 and an electrical contact component 7. The main control board 6 may be disposed in the outer cylinder 1. For example, the main control board 6 may be disposed between the sidewall 13 and the frame 2. The electrical contact component 7 may be electrically connected to the main control board 6. In one embodiment, the electrical contact component 7 and the main control board 6 may be connected by wires to achieve the electrical connection. In some embodiments, the electrical contact component 7 may be plugged into the main control board 6 to achieve the electric connection. Further, the electrical contact component 7 may be disposed on the inner sidewall surface of the outer cylinder 1, and the electrical contact component 7 may be located in the storage member 3. In a specific implementation, the inner sidewall surface of the outer cylinder 1 may be provided with a storage slot for fixing the gimbal 100, and the storage slot may be adapted to the shape of the gimbal 100. The storage slot in this embodiment may be disposed opposite to the opening, and the electrical contact component 7 may be located between the opening and the storage slot. It can be understood that the electrical contact component 7 of this embodiment may also be disposed on the surface of the frame 2, and the electrical contact component 7 may be located in the storage member 3.

The electrical contact component 7 in this embodiment may be used to electrically mate with the gimbal 100 to enable to the electrical connection between the main control board 6 and the gimbal 100. After the main control board 6 is electrically connected to the gimbal 100, the gimbal 100 may be powered/charged through the main control board 6, and/or the electrical contact component 7 may have data communication with the gimbal 100 through the main control board 6. In one embodiment, the electrical contact component 7 may be disposed on the inner sidewall surface of the outer cylinder 1. After the gimbal 100 is stored in the storage box 200, the gimbal 100 may be electrically connected to the electrical contact component 7 to achieve an electrical connection with the storage box 200. Thus, the charging of the gimbal 100 may be performed through the storage box 200, and/or the data interaction with the gimbal 100 may be performed through the storage box 200. While the storage box 200 stores the gimbal, the storage box 200 may also have the charging and/or data interaction functions.

In one embodiment, the electrical contact component 7 may be in contact with the gimbal 100 to achieve the electrical mating. The communication connection between the storage box 200 and the gimbal 100 may be achieved through a simple structure, and the connection is convenient and fast. Further, there is no trouble of winding peripheral wires and the appearance of the product may be as desired.

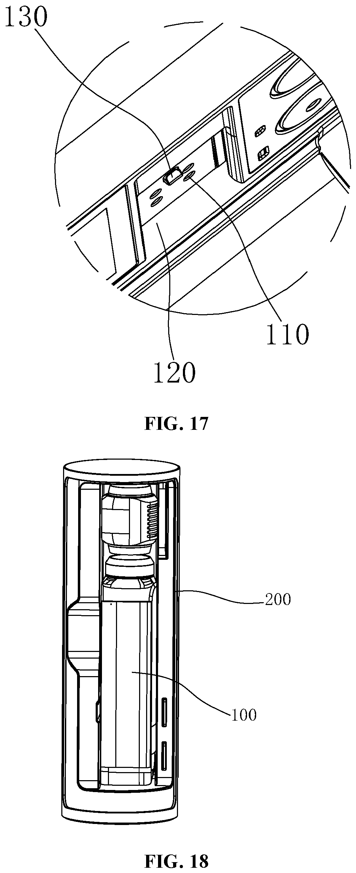

In particular, the gimbal 100 may be provided with an electrical mating component (as shown in FIG. 17). When the gimbal 100 is stored in the storage member 3 of the storage box 200, the electrical mating component may contact the electric contact component 7 to realize the electric connection to make the main control board 6 and the gimbal 100 be electrically connected. Accordingly, the gimbal 100 may be charged through the main control board 6, and the data interaction between the main control board 6 and the gimbal 100 may be realized. In one embodiment, the electrical contact component 7 and the electrical mating component may be respectively the male and female heads of the electrical connector of the same model to facilitate the adaption between the electrical mating component and the electrical contact component 7. It can be understood that the electrical contact component 7 and the electrical mating component may not be mated, and the electrical connection may be achieved through the adapter. In one embodiment, the gimbal 100 is a handheld gimbal, including a handheld component, and the electrical mating component may be disposed on the handheld component.

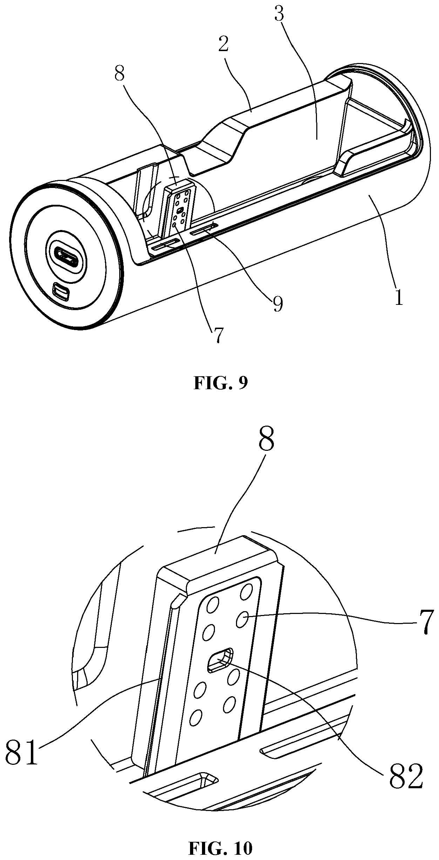

The type of electrical contact component 7 may be selected as needed. For example, the electrical contact component 7 may be selected as a telescopic probe, or as an electrical plug interface, or as an electrical contact. The electrical mating component and the electrical contact component 7 may be adaptive to each other. In one embodiment, the electrical contact component 7 may include a plurality of electrical contact points. As shown in FIG. 10, the plurality of electrical contact points may include eight electrical contact pointes. Four electrical contact points may be arranged in an array to form a first electrical contact component 7 and the other four electrical contact points may be arranged as an array to form a second electrical contact component 7. It can be understood that, in some embodiments, the number, arrangement, and functions of the electrical contact points may be set as needed.

In one embodiment, multiple electrical contact points may have the same function. For example, the multiple electrical contact points may be used to transmit data or may be used to conduct electricity. In some embodiments, the function of a portion of the electrical contact points in the plurality of electrical contact points may be different from that of another portion of the electrical contact points. As in the above-mentioned embodiment, the first electrical contact component 7 may be used to transmit data to realize the data exchange between the storage box 200 and the gimbal 100, and the second electrical contact component 7 may be used for conduction to realize the power supply/charge of the storage box 200 to the gimbal 100.

In one embodiment, a metal material capable of conducting electricity may be selected to make electrical contacts, such as copper.

As shown in FIG. 10, the inner sidewall of the outer cylinder 1 may be provided with a main body 8 that is used to fix the gimbal 100. The main body 8 may include a contact surface, and the electrical contact component 7 may be disposed on the contact surface. When the gimbal 100 is placed in the storage member 3, the gimbal 100 and the main body 8 may be mechanically mated. After the gimbal 100 and the main body 8 are mechanically mated in place, the electrical contact component 7 may contact the corresponding position of the gimbal 100 to achieve the electrical connection with the gimbal 100. The process of mechanical mating may save time and effort, and the quick connection between the storage box 200 and the gimbal 100 may be realized.

The main body 8 and the gimbal 100 may have a fixed connection in different ways, such as concave-convex mating, snap-connection, or threaded connection, etc. In one implementation manner, the gimbal 100 may include a plug-in slot (as shown in FIG. 17), and the electrical mating component may be disposed in the plug-in slot. When the main body 8 and the plug-in slot are inserted in place, the electrical contact component 7 may contact the electrical mating component to be electrically connected. In one embodiment, the gimbal 100 is a handheld gimbal, and the plug-in slot may be disposed on the handheld component.

Further referring to FIG. 10, the main body 8 may also include sides located on both sides of the contact surface. In one embodiment, each side may be respectively provided with a sliding flange 81 for the gimbal 100 to slide in and fix the gimbal 100 through the main body 8 and cause the electrical contact component 7 to be electrically connected with the gimbal 100. In this embodiment, the sliding flange 81 may be used to initially limit the position of the gimbal 100. In one embodiment, the plug-in slot may be mated with the sliding flange 81 with a sliding manner such that the plug-in slot may be fixed to the main body 8 and cause the electrical mating component to be in contact with the electrical contact component 7 to be electrically connected. In this embodiment, the gimbal 100 is placed into the storage member 3 from the opening, and the plug-in slot (as shown in FIG. 17) may slide in from the end of the sliding flange 81 adjacent to the opening and slide toward the end of the sliding flange 81 away from the opening. When the plug-in slot is mated with the main body 8 in place, the electrical mating component may contact the electrical connection component 82.

Further, the contact surface of the main body 8 may be further provided with a connection component 82, and the connection component 82 may be used to connect the gimbal 100 with a detachable manner. When the gimbal 100 slides into the main body 8 along the sliding flange 81, the connection component 82 may be connected with the gimbal 100 to restrict the gimbal 100 from sliding relative to the main body 8. In this embodiment, the gimbal 100 is initially restricted by the sliding flange 81, and the gimbal 100 may be further restricted by the connection component 82, and the gimbal 100 may be firmly installed on the main body 8 such that the electrical contact between the gimbal 100 and the electrical contact component 7 may be more stable, and the electrical connection between the gimbal 100 and the electrical contact component 7 may also be more stable. The limiting direction of the sliding flange 81 to the gimbal 100 may intersect the limiting direction of the connection component 82 to the gimbal 100. In particular, the gimbal 100 may be provided with a connection end (as shown in FIG. 17) at a position corresponding to the connection component 82, and the connection end may mate with the connection component 82 to further limit the gimbal 100, thereby restricting the move of the gimbal 100 relative to the sliding flange 81. Accordingly, the fixed connection between the gimbal100 and the main body 8 may be more reliable. In one embodiment, the gimbal 100 is a handheld gimbal, and the connection end is disposed in a plug-in slot of the handheld component.

The connection component 82 may be a plug-in slot, or other types. The connection end may be adapted to the connection component 82, and the connection end may be an elastic connection piece, a clamping piece, or other types of connection pieces. In this embodiment, the connection end is an elastic connection member, and the elastic connection member and the plug-in slot may have a plug-in mating.

Further, the electrical contact component 7 of this embodiment may include a plurality of electrical contact points, and the plurality of electrical contact points may be distributed around the connection component 82. Such an arrangement may make the electrical connections between the plurality of electrical contact points and the gimbal 100 to be more stable. In one embodiment, a plurality of electrical contact components 7 may be arranged around the connection component 82 according to the functions of the electrical contact points. The first electrical contact component 7 and the second electrical contact component 7 having different functions in the foregoing embodiment are used as examples. The first electrical contact component 7 and the second electrical contact component 7 may be arranged at both sides of the connection component 82.

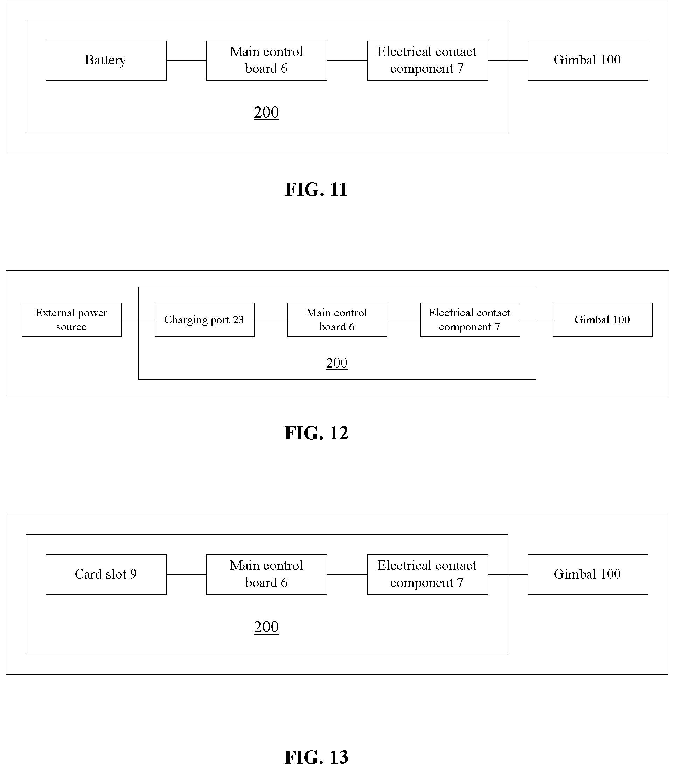

Further, the storage box 200 may use different methods to power/charge the gimbal 100. For example, in one of the embodiments, as shown in FIG. 11, the storage box 200 may further include a battery. In one embodiment, the battery may be stored between the frame 2 and the sidewall 13. The battery of this embodiment may be electrically connected to the main control board 6 to power/charge the gimbal 100 stored in the storage member 3. The battery may be connected to the main control board 6 through wires to achieve an electrical connection, or the battery may directly contact the electrical connection terminals on the main control board 6 to achieve an electrical connection with the main control board 6. The battery in this embodiment may be selected as a rechargeable battery, such as a storage battery, to realize the reuse of the battery. The battery in this embodiment is a storage battery, which has a large capacity and a small size, and may facilitate the miniaturization design of the storage box 200.

In another embodiment, the storage box 200 may further include a charging interface 23 (the charging interface 23 may be disposed on the locking base 22, reference may be made to the description of the above embodiments). The charging interface 23 may pass through the bottom surface 12 of the outer cylinder 1 to expose outer cylinder 1, and the charging port 23 may be electrically connected to the main control board 6. The storage box 200 of this embodiment may be connected to an external power source (such as a commercial power) through the charging port 23 to charge the gimbal 100 stored in the storage member 3.

In still other embodiments, the storage box 200 may include both a battery and a charging port 23, and the main control board 6 may be connected to the battery and the charging port 23 respectively. When the gimbal 100 is stored in the storage member 3, and the power of the gimbal 100 is less than or equal to the preset power threshold (which may be set as required, such as 20%), if the charging port 23 is not connected to an external power source, the gimbal 100 may be powered/charged by the battery; and if the charging interface 23 is connected to an external power source, the gimbal 100 may be powered/charged by the external power source. When the gimbal 100 is not stored in the storage member 3, or the gimbal 100 is stored in the storage member 3, but the power of the gimbal 100 is greater than the preset power threshold, an external power source may be connected through the charging port 23 to charge the battery to realize the reuse of battery.

When the gimbal 100 is stored in the storage member 3, the main control board 6 may have a data interaction with the gimbal 100. For example, the main control board 6 may obtain data information from the gimbal 100. The data information may include the images taken by the camera mounted on the gimbal 100, the parameters of the gimbal 100, and the parameters of the camera mounted on the gimbal 100, etc. The main control board 6 may also transmit data information to the gimbal 100. For example, the main control board 6 may transmit the firmware of the gimbal 100 to the gimbal 100 to upgrade the firmware of the gimbal 100.

Further, the storage box 200 of this embodiment may further include a memory. The memory may be electrically connected to the main control board 6. In some embodiments, when the gimbal 100 is stored in the storage member 3, the main control board 6 may obtain data information from the gimbal 100 and store it in the memory. In other examples, the memory may store data information such as the firmware of the gimbal 100. When the gimbal 100 is stored in the storage member 3, the main control board 6 may obtain the data information, such as the firmware of the gimbal 100 from the memory and send it to the gimbal100. Accordingly, the function of upgrading the firmware of the gimbal 100 may be realized.

The memory of this embodiment may be built-in, or external. In a specific embodiment, in conjunction with FIG. 9 and FIG. 13, the sidewall 13 of the outer cylinder 1 may be further provided with a card slot 9. The card slot 9 may be electrically connected to the main control board 6. The memory in this embodiment is a memory card 500 (such as SD card, or other types of memory card 500). The memory card 500 may be plug-in mated with the card slot 9. In one embodiment, the card slot 9 may be disposed adjacent to the opening, which may not hinder the storage of the gimbal 100, and may facilitate the user's operation. Of course, the care slot 9 may also be disposed at other positions on the sidewall 13 of the outer cylinder 1.

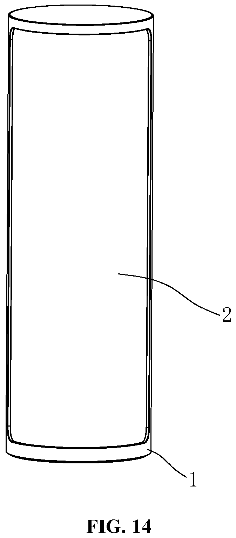

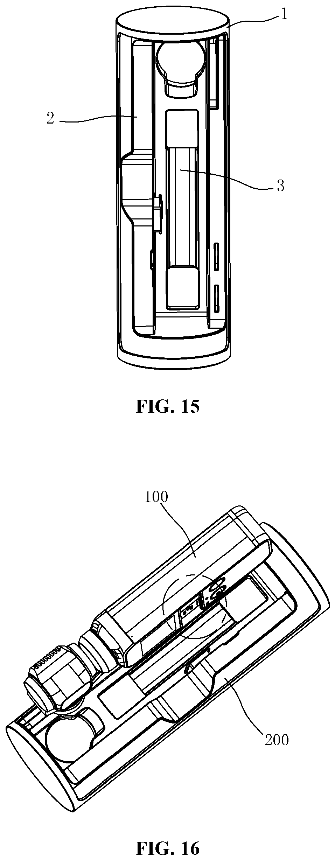

In one embodiment, when the storage box 200 is at the close state (as shown in FIG. 1 and FIG. 14), the opening and the storage member 3 may be at the second relative position, and the rotation preventing member 5 may be locked with the locking base 22. When the storage box 200 needs to be opened to place the gimbal 100 into it, first, the rotation preventing member 5 may be operated to separate the rotation preventing portion 5 from the locking base 22. When the rotation preventing member 5 is separated from the locking base 22, the flat spiral spring 4 may return to the balance position under its own elastic force and drive the frame 2 to rotate relative to the outer cylinder 1 until the opening and the storage member 3 are at the first relative position. The storage box 200 may be at an open state (as shown in FIGS. 1 and 15), and the storage member 3 may be exposed by the opening. Then, the gimbal 100 may be placed into the storage member 3 (as shown in FIG. 16). In particular, the plug-in slot of the gimbal 100 may be slid into the main body 8 along the sliding flange 81. When the plug-in slot and the main body 8 are mated in place, the connection end in the plug-in slot may be fixed to the connection component 82 on the main body 8. Further, the electrical mating component in the plug-in slot may be in contact with the electrical contact component 7 on the main body 8, the storage box 200 may be connected with the gimbal 100 to charge the gimbal 100, or exchange data with the gimbal 100.

After the gimbal 100 is placed in the storage box 200 (as shown in FIG. 18), the storage box 200 may be closed to realize the storage of the gimbal 100. Specifically, the frame 2 may be manually controlled to rotate relative to the outer cylinder 1 to cause the opening and the storage member 3 to be switched from the first relative position to the second relative position. When the opening and the storage member 3 are at the second relative position, the rotation preventing member 5 may be operated to cause the rotation preventing member 5 to mate with the locking base 22 to lock the frame 2 on the outer cylinder 1, and the opening and the receiving component 3 may be held at the second relative position. The opening may be blocked by the sidewall 13, and the gimbal 100 may be stored in the sealed storage member 3 and may not be easily lost.

In some examples, after opening the storage box 200, gimbal components may need to be placed into the storage box 200 (as shown in FIG. 19). After the gimbal components are placed in place (as shown in FIG.20), the gimbal 100 may be placed into the storage member 3 (as shown in FIG. 15).

When taking out the gimbal 100 from the storage box 200 at the close state (as shown in FIG. 1 and FIG. 14), first, the rotation preventing member 5 may be operated to separate the rotation preventing member 5 from the locking base 22. When the rotation preventing member 5 is separated from the locking base 22, the flat spiral spring 4 may return to the balance position under its own elastic force, and drive the frame 2 to rotate relative to the outer cylinder 1 until the opening and the storage member 3 are at the first relative position, and the storage box 200 may be at an open state (as shown in FIG. 1 and FIG. 15), and the storage member 3 may be exposed by the opening. At this time, the gimbal 100 may be taken out from the storage member 3 through the opening.

### Embodiment Two

As shown in FIG. 16 and FIG. 18, the second embodiment of the present disclosure provides a gimbal assembly. The gimbal assembly may include a gimbal 100 and a storage box 200 for storing the gimbal 100. The structure of the storage box 200 is shown in FIGS. 1-13. For details, reference may be made to the description of the above-mentioned first embodiment, which will not be repeated here.

The rotatable connection design of the frame 2 and the outer cylinder 1 of the embodiment of the present disclosure may enable the relative position between the opening and the storage member 3 to be changed as the frame 2 rotates relative to the outer cylinder 1. Through the ingenious structure design, the open and close of the storage box 200 may be realized. The storage box 200 may have the advantages of simple operation, beautiful structure, and portability. By storing the gimbal 100 using the storage box 200, the gimbal 100 may not be easily lost, and may be convenient to carry.

Referring to FIGS. 16-17, the gimbal 100 of this embodiment may be provided with an electrical mating component. When the gimbal 100 is stored in the storage member 3 of the storage box 200, the electrical mating component may be in contact with the electrical contact component 7 to realize the electrical connection to make the main control board 6 and the gimbal 100 to be electrically connected. Accordingly, the main control board 6 may charge the gimbal 100, and/or the data interaction between the main control board 6 and the gimbal 100 may be realized.

In this embodiment, the electrical contact component 7 and the electrical mating component may be respectively the male and female heads of the electrical connector of the same model, which may facilitate the adaptation of the electrical mating component and the electrical contact component 7. It can be understood that the electrical contact component 7 and the electrical matching component may also not be mated, and the electrical connection may be achieved through an adapter. In particular, the gimbal 100 may be a handheld gimbal including a handheld component, and the electrical matching component may be disposed on the handheld component.

The electrical mating component may be adapted to the electrical contact component 7. For example, the electrical mating component may be selected as a telescopic probe, an electrical plug-in port, or an electrical contact point. In one embodiment, the electrical mating component may include a plurality of telescopic probes. In one embodiment, referring to FIG. 17, the telescopic probes may include 4 telescopic probes, of which 2 electrical contact points may be arranged as an array to form a first electrical mating component, and the other 2 telescopic probes may be arranged as an array to form a second electrical mating component. It can be understood that, in other embodiments, the number, arrangement, and functions of the telescopic probes may be set as needed.

In one embodiment, the plurality of telescopic probes may have the same function. For example, the plurality of telescopic probes may be used to transmit data or may be used to conduct electricity. In one embodiment, the function of a portion of the electrical contact points of the plurality of telescopic probes may be different from that of the other portion of the telescopic probes. As in the above-mentioned embodiment, the first electrical mating component may be used to transmit data to realize the data exchange between the storage box 200 and the gimbal 100. The second electrical mating component may be used for conducting electricity to realize the power supply/charging of the gimbal 100 by the storage box 200.

In this embodiment, a metal material that can conduct electricity may be selected to form the telescopic probes, such as copper.

The gimbal 100 of this embodiment may be a handheld gimbal or a non-handheld gimbal. Taking a handheld gimbal as an example, the handheld gimbal in this embodiment may include a handheld component, and the electrical mating component may be disposed on the handheld component. When the gimbal 100 is placed in the storage member 3 of the storage box 200, the electrical mating component may be electrically connected to the electrical contact component 7 to realize an electrical connection between the main control board 6 of the storage box 200 and the gimbal 100. Accordingly, the gimbal 100 may be charged through the main control board 6, and/or the data interaction between the main control board 6 and the gimbal 100 may be realized.

The main body 8 and the gimbal 100 may be mated to each other in different ways, such as concave-convex mating, snap-connection, or threaded connection, etc. In one implementation manner, referring to FIG. 17, the gimbal 100 may include a plug-in slot, and the electrical mating component may be disposed in the plug-in slot. When the main body 8 and the plug-slot are inserted in place, the electrical contact component 7 may be in contact with the electrical mating component to be electrically connected.

In one embodiment, the plug-in slot may be mated with the sliding flange 81 with a slidable manner such that the plug-in slot may be fixed to the main body 8 and the electrical mating component may in contact with the electrical contact component 7 to be electrically connected. In this embodiment, the sliding flange 81 may be used to preliminarily limit the gimbal 100 to ensure a stable contact between the electrical mating component and the electrical contact component 7. In this embodiment, the gimbal 100 may be placed into the storage member 3 through the opening, and the plug-in slot may slide in from the end of the sliding flange 81 adjacent to the opening and may slide toward the end of the sliding flange 81 away from the opening. When the plug-in slot and the main body 8 are mated in place, the electrical mating component may contact the electrical connection component 82.

Referring to Figure 17, the handheld component may also be provided with a connection end, the connection end may be disposed in the plug-in slot and may mated with the connection component 82 to further limit the gimbal 100, thereby restricting the gimbal 100 from sliding relative to the sliding flange 81. Accordingly, the fixed connection between the gimbal 100 and the main body 8 may be more reliable.

The connection end may be mated with the connection component 82. In this embodiment, the connection end is an elastic connection member, and the elastic connection member and the plug-in slot may be mated with a plug-in manner. In particular, when the plug-in slot and the main body 8 are mated in place, the elastic connection member may be locked into the plug-in slot to restrict the handheld component from sliding relative to the main body 8. When the gimbal 100 is taken out from the storage member 3, the elastic connection member may be separated from the plug-in slot under the action of the pressing force.

Further, the electrical contact component 7 of this embodiment may include a plurality of telescopic probes. The plurality of telescopic probes may be distributed around the connection end. Such an arrangement may make the electrical connection between the plurality of telescopic probes and the electrical contact component 7 to be more stable. In one embodiment, according to the function of the telescopic probes, a plurality of electrical contact components 7 may be arranged around the connection component 82. The foregoing embodiment takes the first electrical mating component and the second electrical mating component with different functions as an example. The first electrical mating component and the second electrical mating component may be arranged at both sides of the connection end.

As shown in FIG. 19 and FIG. 20, the gimbal assembly of this embodiment may further include an adapter 300 that may be electrically connected to the electrical mating component, and the adapter 300 may be used to connect external devices (such as mobile phones, or other mobile terminals.) to enable the gimbal 100 to communicate with the external devices.

An electrical connection component 82 may be disposed on the adapter 300, and the electrical connection component 82 may be electrically connected to the electrical mating component. In one embodiment, the electrical connection component 82 and the electrical mating component may be respectively the male and female heads of the electrical connector of the same model, which may facilitate the adaptation of the electrical connection component 82 to the electrical mating component.

Further, the adapter 300 may also be provided with a fixing end, and the fixing end may be mated with the connection end. In this embodiment, the connection end is an elastic connection member, and the fixing end may be a groove. The elastic connection member may be plug-in mated with the groove to cause the adapter 300 to be fixed in the groove, and the electrical connection component 82 and the electrical mating component may be electrically connected. The contact between the electrical connection component 82 and the electrical mating component may be achieved through the mechanical mated of the elastic connection member and the groove. The process of the mechanical mate may save time and effort, and the electrical connection between the adapter 300 and the main control board 6 may be quickly realized.

The adapter 300 and the external devices may be electrically connected by a plug-in method, or other connection methods that can be used for the electrical connection. In one embodiment, the external devices may be connected to the adapter 300 with a rotatable manner such that the angle of the external devices relative to the handheld component may be adjusted to meet the user's viewing angle requirements. It should be noted that, in the embodiment of the present disclosure, the adapter 300 may not be in the form of a wire, but may be used as a fixing member to fix the external devices on the handheld component.

### Embodiment three

With reference to FIG. 2 and FIG. 8-10, the third embodiment of the present disclosure provides a storage box 200. The storage box 200 may include an outer cylinder 1, a main control board 6 and an electrical contact component 7. The outer cylinder 1 of this embodiment may have a top surface 11, a bottom surface 12 and a sidewall 13, and the sidewall 13 may have an opening. The main control board 6 may be disposed inside the outer cylinder 1. The electrical contact component 7 may be electrically connected to the main control board 6, and the electrical contact component 7 may be disposed on the inner sidewall surface of the outer cylinder 1.

When the gimbal 100 is placed into the outer cylinder 1 through the opening, the electrical contact component 7 may be used to electrically mated with the gimbal 100 such that the main control board 6 and the gimbal 100 may be electrically connected. Accordingly, the main control board 6 may charge the gimbal 100, and/or the data interaction between the main control board 6 and the gimbal 100 may be realized.

The storage box 200 of this embodiment may also supply power to/charge the gimbal 100 and/or perform data interaction with the gimbal 100 while storing the gimbal 100. Further, the electrical contact component 7 may be in contact with the gimbal 100 to achieve the electrical mating and the communication connection between the storage box 200 and the gimbal 100 through a simple structure. Thus, the connection may be convenient and fast, and there may be no trouble of entanglement of peripheral wires, and the product may have strong aesthetics.

The structure of the storage box 200 of this embodiment is shown in FIG. 1 to FIG. 20. For details, reference may be made to the description of the embodiment one, which will not be repeated here.

### Embodiment four

With reference to FIG. 16 and FIG. 18, the fourth embodiment of the present disclosure provides a gimbal assembly. The gimbal assembly may include a gimbal 100 and a storage box 200 for storing the gimbal 100. The structure of the storage box 200 may be referred to the description of the third embodiment above, and will not be repeated here.

The gimbal 100 of this embodiment may be provided with an electrical mating component. When the gimbal 100 is placed into the outer cylinder 1 through the opening, the electrical contact component 7 may be electrically mated with the electrical mating component such that the main control board 6 and the gimbal 100 may be electrically connected. Accordingly, the gimbal 100 may be charged through the main control board 6, and/or the data interaction between the main control board 6 and the gimbal 100 may be realized.

The structure of the gimbal 100 may be the same as that of the third embodiment. For details, reference may be made to the description of the third embodiment, which will not be repeated here.

Further, the gimbal assembly of this embodiment may include an adapter 300. The structure of the adapter 300 and the way in which the adapter 300 mates with the gimbal 100 may be similar to that of the adapter 300 in the third embodiment. The structure and the mating manner of the adapter 300 and the gimbal 100 may be the same. For details, reference may be made to the description of the third embodiment above, which will not be repeated here.

It should be noted that, in this disclosure, relational terms, such as first and second, are only used to distinguish one entity or operation from another entity or operation, and do not necessarily require or imply these entities operations have any such actual relationship or sequence. The terms "include", "consist of' or any other variants thereof are intended to cover non-exclusive inclusion such that a process, method, article or device including a series of elements not only includes those elements, but also includes other elements not explicitly listed or also include elements inherent to such processes, methods, articles, or equipment. If there are no more restrictions, the element defined by the sentence "including a..." does not exclude the existence of other same elements in the process, method, article, or equipment that includes the element.

The storage box provided by the embodiment of the present disclosure and the gimbal assembly provided with it are described above in detail. In this disclosure, specific examples are used to illustrate the principles and implementation of the present disclosure. The description of the above embodiments is only used to help to understand the method of the present disclosure and its core ideas. At the same time, for those of ordinary skill in the art, according to the ideas of the present invention, there will be changes in the specific implementation and the scope of application. In summary, the content of this disclosure should not be construed as limiting the present disclosure.

## Claims

1. A storage box, **characterized in that**, comprising:
an outer cylinder, having a top surface, a bottom surface and a sidewall, wherein the sidewall has an opening; and
a frame, disposed inside the outer cylinder, and having a rotatable connection with the outer cylinder,
wherein a space between a surface of the frame and the sidewall of the outer cylinder forms a storage member, and as the frame rotates relative to the outer cylinder, the opening and the storage member alternates between a first relative position and a second relative position.

2. The storage box according to claim 1, **characterized in that**:
when the opening and the storage member are at the first relative position, the storage member is exposed by the opening; and
when the opening and the storage member are at the second relative position, the storage member is blocked by the sidewall.

3. The storage box according to claim 1 or claim 2, **characterized in that**:
the rotatable connection between the frame and the outer cylinder is realized by an elastic component.

4. The storage box according to claim 1 or claim 2, **characterized in that**:
the rotatable connection between the frame and the outer cylinder is realized by a gear teeth engagement between the frame and the outer cylinder.

5. The storage box according to claim 1 or claim 2, **characterized in that**:
the rotatable connection between the frame and the outer cylinder is realized by a damping structure disposed between the frame and the outer cylinder.

6. The storage box according to claim 3, **characterized in that**:
the elastic component includes a flat spiral spring connected between the frame and the outer cylinder.

7. The storage box according to claim 6, **characterized in that**:
a first end of the flat spiral spring forms a bending member, and mates with a protrusion on the bottom surface of the outer cylinder; and/or
a second end of the flat spiral spring forms a bending member, and mates with a fixing member on a sidewall of the frame.

8. The storage box according to claim 6, **characterized in that**:
when the storage member and the opening are at the first relative position, the flat spiral spring is at a balance state; and
when the storage member and the opening are at the second relative position, the flat spiral spring is stretched.

9. The storage box according to claim 1 or claim 2, **characterized in that**:
the storage box further includes a rotation preventing member, configured to lock the frame on the outer cylinder.

10. The storage box according to claim 9, **characterized in that**:
the rotation preventing member is connected to the bottom surface of the outer cylinder;
the frame includes a locking base;
the locking base passes through the bottom surface and is exposed outward from the outer cylinder; and
the rotation preventing member is configured to move relative to the locking base to alternate between a locked state and an unlocked state,
wherein:
when the rotation preventing member moves relative to the locking base to the locked state, the frame is configured to move relative to the outer cylinder to cause the opening and the storage member to alternate between the first relative position and the second relative position; and
when the opening and the storage member are at the second relative position, with the rotation preventing member moving relative to the locking base to the locked state, the frame is locked on the outer cylinder to cause the opening and the storage member to be held at the second relative position.

11. The storage box according to claim 10, **characterized in that**:
the rotation preventing member is provided with a clamping protrusion,
the locking base is provided with a clamping groove;
when the rotation preventing member moves relative to the locking base to the unlocked state, the clamping protrusion and the clamping groove are separated; and
when the rotation preventing member moves relative to the locking base to the locked state, the clamping protrusion and the clamping groove are mated.

12. The storage box according to claim 10, **characterized in that**:
the rotation preventing member is provided with an operation end; and
by operating the operation end, the rotation preventing member moves relative to the locking base to alternate between the locked state and the unlocked state.

13. The storage box according to claim 12, **characterized in that**:
the rotation preventing member is provided with an elastic member,
the elastic member is fixed on the bottom surface of the outer cylinder;
when the operation end is operated, the rotation preventing member moves away from the locking base to be switched to the unlocked state; and
when the operation end is switched from an operated state to a released state, the rotation preventing member moves close to the locking base to be switched to the locked state under an elastic force of the elastic member.

14. The storage box according to claim 10, **characterized in that**:
the bottom surface of the outer cylinder is provided with a receiving groove;
the rotation preventing member is connected in the receiving groove; and
the rotation preventing member moves relative to the locking base in the receiving groove to alternate between the locked state and the unlocked state.

15. The storage box according to claim 10, **characterized in that**:
the locking base is cylinder-shaped and is provided with a charging port.

16. The storage box according to claim 10, **characterized in that**:
the bottom surface of the outer cylinder includes a first cover body;
the first cover body is ring-shaped and has a through hole; and
the locking base passes through the piecing hole and is exposed outward from the outer cylinder.

17. The storage box according to claim 16, **characterized in that**:
an edge of the first cover body is provided with a sliding protrusion;
the sliding protrusion is provided a fixing groove opened along a circumferential direction of the first cover body;
an inner sidewall surface of the outer cylinder is provided with a guiding groove and a fixing protrusion;
the guiding groove and the fixing protrusion are adjacently disposed along the circumferential direction of the first cover body; and
the sliding protrusion is configured to move toward the fixing protrusion along the guiding groove to cause the fixing protrusion to slide into the fixing groove to mate with the fixing groove to fix the first cover body with the sidewall.

18. The storage box according to claim 16, **characterized in that**:
the sliding protrusion is more than one; and
the more than one sliding protrusions are uniformly distributed around an edge of the first cover.

19. The storage box according to claim 17 or claim 18, **characterized in that**:
two ends of the fixing groove pass through the sliding protrusion.

20. The storage box according to claim 17, **characterized in that**:
the bottom surface of the outer cylinder also includes a second cover body;
the second cover body is disposed at a side of the first cover body away from the storage member;
a side of the second cover body facing the first cover body is provided with a plug-in protrusion; and
the plug-in protrusion and a gap between the first cover body and the inner sidewall surface of the outer cylinder are mated with a plug-in manner.

21. The storage box according to claim 1, **characterized in that**:
the storage box also includes a main control board disposed inside the outer cylinder and an electrical contact component electrically connected with the main control board;
the electrical contact component is disposed on the inner sidewall surface of the outer cylinder and located in the storage member; and
the electrical contact component is configured to mate with a gimbal to achieve an electrical connection between the main control board and the gimbal to charge the gimbal through the main control board, and/or have a data interaction with the gimbal.

22. The storage box according to claim 21, **characterized in that**:
the electrical contact component includes an electrical contact point.

23. The storage box according to claim 21, **characterized in that**:
the inner sidewall surface of the outer cylinder is provided with a main body configured to have a fixed connection with the gimbal; and
the electrical contact component is disposed on a contact surface of the main body.

24. The storage box according to claim 23, **characterized in that**:
the main body includes sides located at two sides of the contact surface; and
a sliding flange is disposed at each side, configured to cause the gimbal to slide in to fix the gimbal through the main body and cause the electrical contact component to be electrically connected with the gimbal.

25. The storage box according to claim 24, **characterized in that**:
the contact surface of the main body is also provided with a connection component;
the connection component is configured to have a detachable connection with the gimbal; and
when the gimbal slides into the main body through the sliding flange, the connection component is connected with the gimbal to limit a sliding motion of the gimbal relative to the main body.

26. The storage box according to claim 25, **characterized in that**:
the electrical contact component includes multiple electrical contact points; and
the multiple electrical contact points are distributed around the connection component.

27. The storage box according to claim 25, **characterized in that**:
the connection component is a plug-in slot.

28. The storage box according to claim 21, **characterized in that**:
the inner sidewall surface of the outer cylinder is provided with a storage slot configured to adapt a shape of the gimbal;
the storage slot is disposed opposite to the opening; and
the electrical contact component is disposed between the opening and the storage slot.

29. The storage box according to claim 21, **characterized in that**:
the storage box also includes a battery;
the battery is electrically connected with the main control board to charge the gimbal; and/or
the storage box also includes a charging port and the charging port passes through the bottom surface of the outer cylinder and is exposed outward from the outer cylinder, and is electrically connected with the main control board to charge the gimbal.

30. The storage box according to claim 21, **characterized in that**:
the storage box also includes a memory;
the memory is electrically connected with the main control board;
the main control board obtains data information from the gimbal and stores the data information in the memory; and
the data information includes images taken by a camera that is carried by the gimbal.

31. The storage box according to claim 30, **characterized in that**:
the sidewall of the outer cylinder is provided with a card slot;
the card slot is electrically connected with the main control board;
the memory is a memory card; and
the memory card mates with the card slot with a plug-in manner.

32. The storage box according to claim 31, **characterized in that**:
the card slot is disposed adjacent to the opening.

33. A gimbal assembly, comprising a gimbal, **characterized in that**, further comprising a storage box according to any one of claims 1-32, and the storage box is configured to store the gimbal.

34. The gimbal assembly according to claim 33, **characterized in that**:
the gimbal is a handheld gimbal, including a handheld component;
the handheld component is provided with an electrical mating component; and
when the gimbal is stored in the storage box, the electrical mating component is electrically connected to the electrical contact component of the storage box to achieve an electrical connection between the main control board of the storage box and the gimbal to charge the gimbal through the electrical control board, and/or have a data interaction with the gimbal.

35. The gimbal assembly according to claim 34, **characterized in that**:
the electrical mating component includes a telescopic probe.

36. The gimbal assembly according to claim 34, **characterized in that**:
the handheld component is provided with a plug-in slot;
the electrical mating component is disposed in the plug-in slot; and
the plug-in slot mates with the sliding flange of the storage box with a sliding manner to fix the plug-in slot with the main body of the storage box and electrically connect the electrical mating component with the electrical contact component.

37. The gimbal assembly according to claim 33, **characterized in that**:
the handheld component is also provided with a connection end;
the connection end is disposed in the plug-in slot; and
the connection end mates with the connection component of the storage box to limit a sliding motion of the handheld component relative to the main body.

38. The gimbal assembly according to claim 37, **characterized in that**:
the electrical mating component includes multiple telescopic probes; and
multiple telescopic probes are distributed around the connection end.

39. The gimbal assembly according to claim 37, **characterized in that**:
the connection end includes an elastic connection member; and
the elastic connection member mates with the connection component with a plug-in manner.

40. The gimbal assembly according to claim 34, **characterized in that**, further comprising:
an adapter,
wherein:
the adapter is electrically connected with the electrical mating component; and
the adapter is configured to connect an external device to achieve an electrical connection between the gimbal and the external device.

41. A storage box, **characterized in that**, comprising:
an outer cylinder, having a top surface, a bottom surface and a sidewall, wherein the sidewall has an opening;
a main control board disposed inside the outer cylinder; and
an electrical contact component electrically connected with the main control board, wherein the electrical contact component is disposed on an inner sidewall surface of the outer cylinder,
wherein, when a gimbal is placed in the storage box through the opening, the electrical contact component is configured to electrically mate with the gimbal to achieve an electrical connection between the main control board and the gimbal to charge the gimbal through the main control board, and/or have a data interaction with the gimbal.

42. The storage box according to claim 41, **characterized in that**:
the electrical contact component includes an electrical contact point.

43. The storage box according to claim 41, **characterized in that**:
the inner sidewall surface of the outer cylinder is provided with a main body, configured to have a fixed connection with the gimbal; and
the electrical contact component is disposed a contact surface of the main body.

44. The storage box according to claim 43, **characterized in that**:
the main body includes sides at two sides of the contact surface; and
each side is respectively provided with a sliding flange, configured to allow the gimbal to slide in to fix the gimbal through the main body and electrically connect the electrical contact component with the gimbal.

45. The storage box according to claim 44, **characterized in that**:
the contact surface of the main body is also provided with a connection component,
the connection component is configured to connect with the gimbal with a detachable manner; and
when the gimble slides into the main body along the sliding flange, the connection component is connected with the gimbal to limit a sliding motion of the gimbal relative to the main body.

46. The storage box according to claim 45, **characterized in that**:
the electrical contact component includes a plurality of electrical contact points; and
the plurality of electrical connect points are distributed around the connection component.

47. The storage box according to claim 45, **characterized in that**:
the connection component is a plug-in slot.

48. The storage box according to claim 41, **characterized in that**:
the inner sidewall surface of the outer cylinder is provided a storage slot configured to adapt to a shape of the gimbal;
the storage slot is disposed opposite to the opening; and
the electrical contact component is disposed between the opening and the storage slot.

49. The storage box according to claim 41, **characterized in that**:
the storage box also includes a battery;
the battery is electrically connected with the main control board to charge the gimbal; and/or
the storage box also includes a charging port and the charging port pierces through the bottom surface of the outer cylinder and is exposed outward from the outer cylinder and is electrically connected with the main control board to charge the gimbal.

50. The storage box according to claim 41, **characterized in that**:
the storage box also includes a memory;
the memory is electrically connected with the main control board;
the main control board obtains data information from the gimbal and stores the data information in the memory; and
the data information may include images taken by a camera carried by the gimbal.

51. The storage box according to claim 50, **characterized in that**:
the sidewall of the outer cylinder is also provided with a card slot;
the card slot is electrically connected with the main control board;
the memory is a memory card; and
the memory card mates with the card slot with a plug-in manner.

52. The storage box according to claim 51, **characterized in that**:
the card slot is disposed adjacent to the opening.

53. A gimbal assembly, comprising a gimbal, **characterized in that**, further comprising a storage box according to any one of claims 1-12, configured to store the gimbal;
the gimbal is provided with an electrical mating component, when the gimbal is stored in the storage box, the electrical mating component is electrically connected to the electrical contact component of the storage box to cause the main control board of the storage box to be electrically connected with the gimbal to charge the gimbal through the electrical control board, and/or to have a data interaction with the gimbal

54. The gimbal assembly according to claim 53, **characterized in that**:
the gimbal is a handheld gimbal, including a handheld component; and
the electrical mating component is disposed on the handheld component.

55. The gimbal assembly according to claim 53 or claim 54, **characterized in that**:
the electrical mating component includes a telescopic probe.

56. The gimbal assembly according to claim 54, **characterized in that**:
the handheld component is provided with a plug-in slot;
the electrical mating component is disposed in the plug-in slot; and
the plug-in slot mates with the sliding flange of the storage box with a sliding manner to fix the plug-in slot with the main body of the storage box and electrically connect the electrical mating component with the electrical contact component.

57. The gimbal assembly according to claim 56, **characterized in that**:
the handheld component is also provided with a connection end;
the connection end is disposed in the plug-in slot; and
the connection end mates with the connection component of the storage box to limit a sliding motion of the handheld component relative to the main body.

58. The gimbal assembly according to claim 57, **characterized in that**:
the electrical mating component includes multiple telescopic probes; and
the multiple telescopic probes are distributed around the connection end.

59. The gimbal assembly according to claim 57, **characterized in that**:
the connection end includes an elastic connection member; and
the elastic connection member mates with the connection component of the storage box with a plug-in manner.

60. The gimbal assembly according to claim 53, **characterized in that**, further comprising:
an adapter,
wherein:
the adapter is electrically connected with the electrical mating component; and
the adapter is configured to connect an external device to achieve an electrical connection between the gimbal and the external device.

61. A gimbal storage box, **characterized in that**, comprising:
an outer cylinder, having a top surface, a bottom surface and a sidewall, wherein the sidewall has an opening; and
a frame, disposed inside the outer cylinder, and having a rotatable connection with the outer cylinder,
wherein a space between the frame and the outer cylinder forms a storage member, and the storage member is configured to store the gimbal.

62. The gimbal storage box according to claim 61, **characterized in that**:
the storage member is at an open state through the opening or at a close state when being blocked by the sidewall as the frame rotates relative to the outer cylinder.
